# EUROPEAN PATENT APPLICATION

(11) **EP 2 325 833 A1**
(43) Date of publication of application: **25.05.2011**
(21) Application number: 09817567.2
(22) Date of filing: 14.07.2009
(51) Int. Cl.: G09G 3/36, G02F 1/13, G02F 1/133, G02F 1/1368, G06F 3/041, G09F 9/00, G09F 9/30, G01J 1/42, G09G 3/20

(54) **DISPLAY PANEL AND DISPLAY PANEL INSPECTION METHOD**

(30) Priority: 30.09.2008 JP 2008254400
(71) Applicant: Sharp Kabushiki Kaisha, Osaka-shi, Osaka 545-8522 (JP)
(72) Inventor: Yousuke, Nakagawa, Osaka 545-8522 (JP); Kazuhiro, Maeda, Osaka 545-8522 (JP); Ichiro, Shiraki, Osaka 545-8522 (JP)
(74) Representative: Müller-Boré & Partner Patentanwälte
(86) International application number: PCT/JP2009/062741
(87) International publication number: WO 2010/038530

(57) **Abstract**

The present invention provides a display panel (10) of an active matrix type including a display section (12) in which pixels (30) are arranged, wherein the display section (12) includes optical sensors whose output signal is transmitted to a peripheral region (13) via a source bus line (20), wherein an optical sensor output line (50) used for the transmission of the output signal is electrically connectable with a non-optical sensor output line (52) and the display panel (10) includes an optical sensor output sharing switch (60) for switching over connection and disconnection of the optical sensor output line (50) and the non-optical sensor output line (52).

## Description

### Technical Field

The present invention relates to a display panel including optical sensors in pixels, and a method for inspecting the display panel.

### Background Art

Display panels having optical sensors in pixels have been developed and applied to finger print authentication and touch panel.

### (Patent Literature 1)

A display panel including such optical sensors is disclosed, for example, Patent Literature 1 below.

Patent Literature 1 discloses a drive device for a display device in which detecting sections (optical sensors) are provided in pixels, and the detecting sections send a detection signal (optical sensor output) to a signal reading section via detection signal lines.

### Citation List

### Patent Literatures

Patent Literature 1
   Japanese Patent Publication "Tokukai 2006-133786 (Publication Date: May 25, 2006)"

### Summary of Invention

### Technical Problem

However, the conventional display panel including such optical sensors have a problem in that it is not easy to inspect the optical sensors.

Moreover, the conventional display panel has a drawback in that the optical sensor output signal, which is an output signal of the optical sensors, is transmitted via a large wiring resistance thereby resulting in a large output delay. In the following, these are explained referring to drawings.

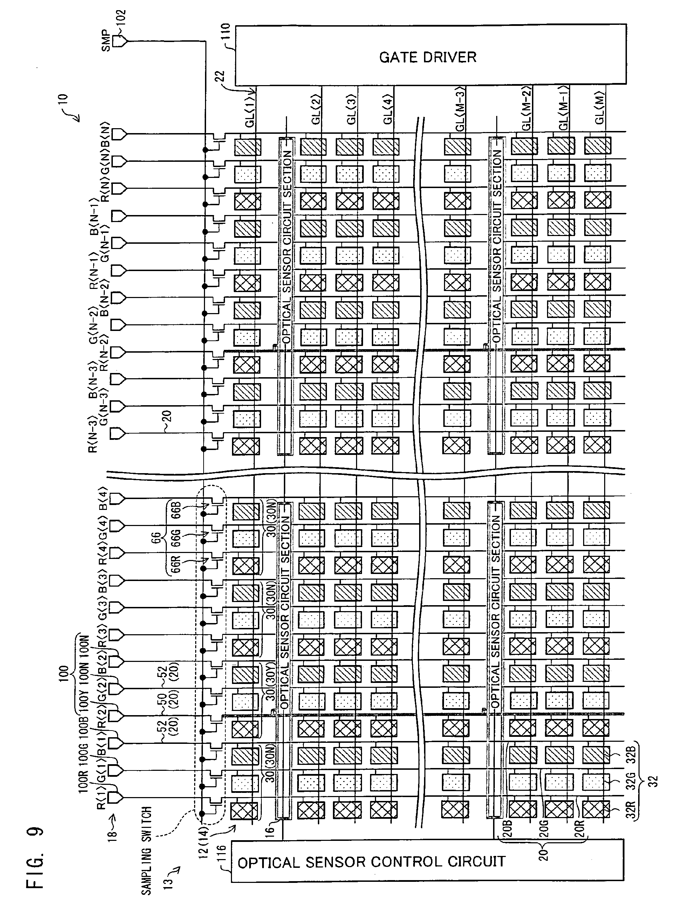

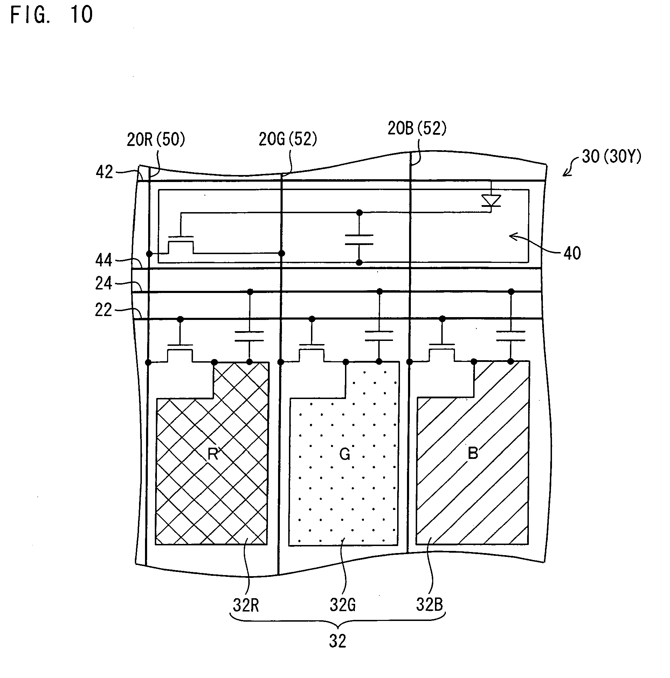

Fig. 9 is a view schematically illustrating a configuration of a conventional display panel including optical sensors. Moreover, Fig. 10 is a view schematically illustrating a configuration of a conventional pixel in which an optical sensor is provided.

As illustrated in Fig. 9, a center portion of the display panel 10 is a display section 12 having a substantial rectangular shape and a plurality of pixels 30 arranged in matrix. A region around the display section 12, which region is called as a peripheral region 13 herein, is provided with, for example, a control circuit, drivers, pads for electrically connecting the display panel with another component.

To begin with, the display section 12 is explained. In the display section 12, the plurality of pixels 30 are arranged in matrix, as described above. Each pixel 30 includes three picture elements of red, green, and blue. That is, the pixel 30 is provided with three picture element electrodes 32 (red picture element electrodes 32R, green picture element electrodes 32G, and blue picture element electrodes 32B).

The display panel 10 in Fig. 9 is a so-called active matrix type. Thus, the display panel 10 includes gate bus lines 22 (GL<1> to GL<M>) and the source bus lines 20 aligned substantially perpendicular to each other the matrix of the picture element electrodes 32. The source bus lines 20 are extended to the peripheral region 13 of the display section 12 and are provided with at each end thereof a pad 100 for allowing, for example COG mounting of a source driver (not illustrated) or optical sensor output signal processor circuit (not illustrated).

More specifically, the source bus lines 20 includes three types of picture element electrode source bus lines, namely, red picture element electrode source bus lines 20R, green picture element electrode source bus lines 20G, and blue picture element electrode source bus lines 20B respectively for the picture element electrodes 32 of respective colors (red picture element electrodes 32R, green picture element electrodes 32G, and blue picture element electrodes 32B). The red picture element electrode source bus lines 20R, green picture element electrode source bus lines 20G, and blue picture element electrode source bus lines 20B are provided with at each end thereof red picture element pads 100R (R<1> to R<N>), green picture element pads 100G (G<1> to G<N>), and blue picture element pads 100B (B<1> to B<N>).

Next, referring to Fig. 10, the pixel 30 of the display panel 10 is explained in more detail. Fig. 10 is a view schematically illustrating a conventional pixel provided with an optical sensor.

In the configuration example illustrated in Fig. 10, one optical sensor 40 is provided mainly per one pixel 30 including three picture element electrodes, that is, the red picture element electrode 32R, the green picture element electrode 32G, the blue picture element electrode 32B. In a vicinity of the optical sensor 40, a row selecting line 42 and a read-out line 44 are provided, for example, for controlling the optical sensor 40, and are connected with the optical sensor 40 respectively.

Then, the optical sensor output from the optical sensor 40 is outputted via the source bus line 20. More specifically, the pixel 30 is provided with the three source bus lines 20 (the red picture element source bus line 20R, green picture element source bus line 20G, and blue picture element source bus line 20B), a gate bus line 22, and a storage capacitor line 24. The output of the optical sensor 40 is carried out via one of the three source bus lines 20.

More specifically, in the configuration example illustrated in Fig. 10, the red picture element source bus line 20R functions as an optical sensor output line 50 for transmitting the optical sensor output signal outputted from the optical sensor 40.

The remaining two source bus lines 20, namely, the green picture element source bus line 20G and the blue picture element source bus line 20B serve as non-optical sensor output line 52, which is a line not contributing to the transmission of the optical sensor 40.

As described above, the source bus lines 20 includes one functioning as the optical sensor output line 50 through which the output from the optical sensor 40 is transmitted, and ones functioning as non-optical sensor output line 52 through which no output from the optical sensor 40 is transmitted. Because the functions of the source bus lines 20 are different as such, the pads 100 provided at the ends of the source bus lines 20 are also different correspondingly.

That is, as illustrated in Fig. 9, the pads 100 are classified into an optical sensor output pad 100Y which is a pad 100 for outputting the output of the optical sensor, and a non-optical sensor output pad 100N which is a pad not for outputting the output of the optical sensor.

More specifically, in case where, as in the present configuration example, the red picture element source bus line 20R is the optical sensor output line 50 and the green picture element source bus line 20G and the blue picture element source bus line 20B are the non-optical sensor output line 52, the pad 100 provided at the end of the red picture element source bus line 20R is the optical sensor output pad 100Y, and the pads 100 respectively provided at the ends of the green picture element source bus line 20G and the blue picture element source bus line 20B are the non-optical sensor output pads 100N.

The optical sensors 40 are provided respectively inside the pixels 30, but not all the pixels are provided with the optical sensor 40. That is, the pixels 30 include pixels 30 (optical sensor built-in pixel 30Y) in which the optical sensor 40 is provided, as illustrated in Fig. 10, and pixels 30 (non-optical sensor built-in pixel 30N) in which no optical sensor 40 is provided. Thus, all three of the source bus lines 20 from the non-optical sensor built-in pixels 30N are the non-optical sensor output lines 52.

Next, the peripheral region 13 of the display section 12 is explained mainly.

The peripheral region 13 is provided with drivers, switches, etc. in addition to the pads 100.

To begin with, the source bus lines 20 are respectively provided with sampling switches 66 (red picture element sampling switch 66R, green picture element sampling switch 66G, blue picture element sampling switch 66B). The sampling switches 66 are connected with lines extended from sampling switch control signal input pads.

Moreover, the peripheral regions 13 is provided with an optical sensor control circuit 116 for controlling an optical sensor circuit section 16 including the optical sensor 40 provided in the display section 12 (optical sensor section 14).

Moreover, the peripheral region 13 is provided with a gate driver 110 connected with the gate bus lines 22.

The display panel 10 with the above-described configuration is disadvantageous in that the inspection of the optical sensor 40 is difficult and the delay of the optical sensor output signal is large, etc. The disadvantages of the display panel 10 is explained below.

### (Difficulty in Inspection)

To begin with, the difficulty in the inspection of the optical sensor 40 is explained. In order to inspect whether the optical sensor 40, in other words, the optical sensor circuit section 16, is normally operable or not, it is necessary to inspect the optical sensor output signal via the optical sensor output pad 100Y provided on the optical sensor output line 50 in which the optical sensor output signal from the optical sensor 40 is outputted. More specifically, for example, if the inspection is carried out with a prober, it is necessary to contact a probe with the optical sensor output pad 100Y precisely.

The optical sensor output pad 100Y is generally a pad for COG mounting. Thus, the optical sensor output pad 100Y is narrow in its pad width. Moreover, the optical sensor output pad 100Y is provided with narrow gaps with its neighboring pads. This means that alignment margin for setting the prober to the pad is small.

Thus, it is not easy to contact the probe to the pad precisely in probing.

### (Signal Delay)

Next, the delay in the optical sensor output signal is explained. As explained above, the optical sensor output signal outputted from the optical sensor 40 is transmitted to the optical sensor output pad 100Y via the optical sensor output line 50, which is one of the source bus line 20.

The source bus lines 20 are generally narrow in line width. Due to the narrow line width of the source bus lines 20, the optical sensor output signal from the optical sensor 40 is transmitted against a large line resistance. Thus, the delay of the optical sensor output signal is large.

The present invention was accomplished in view of these problems, and an object of the present invention is to provide a display panel and an inspection method thereof in which the optical sensors can be inspected with easy, and the output signal from the optical sensors can be outputted with a smaller output delay.

### Solution to Problem

In order to attain the object, a display panel of the present invention is a display panel of active-matrix type, including: a display section including a plurality of pixels, each of which includes a picture element electrode; first switching elements; and bus lines, each picture element electrode being connected with corresponding one of the first switching elements, each first switching element being connected with corresponding one of the bus lines, wherein: the display section includes optical sensors; the optical sensors output an output signal so that the output signal is transmitted to a peripheral region of the display section via corresponding one of the bus lines; the bus lines includes first bus lines used for the transmission of the output signal and second bus lines not used for the transmission of the output signal; at least one of the first bus lines is electrically connectable with at least one of the second bus lines; and the display panel comprises a second switching element for connecting and disconnecting the at least one of the first bus lines and the at least one of the second bus lines.

With this configuration, the output signal from an output sensor is transmitted to the peripheral region via the corresponding bus line. The bus line used for the transmission of the output signal and the bus line not used for the transmission of the output signal can be electrically connected by the switching-over of the switches.

With this configuration, the inspection of the optical sensor in which the optical signal of the optical sensor is detected in the peripheral region so as to find out whether the optical sensor is normally operable or not can be carried out in such a manner that the output signal is detected from a plurality of the bus lines by connecting both the bus lines.

Thus, for example, a detector terminal of an inspecting device can be positioned with a greater degree of freedom. Thus, it is possible to carry out the inspection of the optical sensors more easily.

Moreover, the transmission of the optical signal to the peripheral region from the display section in which the optical sensor is provided is carried out via a plurality of bus lines.

Thus, the transmission of the output signal can be carried out with a wider substantial line width. Therefore, the transmission is carried out with a smaller line resistance, thereby allowing reduction in the optical delay of the output signal.

The display panel with this configuration allows easy inspection of the optical sensors and reduction in the output delay of the optical signal from the optical sensors.

The display panel of the present invention is preferably configured to include pads in the peripheral region, the pads being respectively provided to each of the first and second bus lines electrically connectable with each other, each pad being for electrically connecting an external element and the bus line to which the pad is provided.

In this configuration, the pads connected to the bus lines are provided in the peripheral region.

Thus, it is easier to position the detector terminal of the inspecting device for the inspection of the optical sensor in which the optical signal from the optical sensor is detected in the peripheral region in order to inspect the optical sensor is normally operable or not. More specifically, for example, the inspection with the prober can be carried out with ease positioning of the probe.

Thus, the display panel with this configuration allows easier inspection of the optical sensors.

The display panel of the present invention is preferably configured such that the pads provided to the first and second bus lines connectable with each other are positioned adjacent with each other.

In this configuration, the pads via which the detection of the output signal can be carried out are positioned adjacent with each other.

This provides a greater substantial pad width to the inspection of the optical sensors.

Thus, the detector terminal of the inspecting device, for example, the probe of the prober can be positioned more easily. Thus, the display panel with the above configuration allows easier inspection of the optical sensors.

The display panel of the present invention is preferably configured such that the first switching elements are transistors; the bus lines connected with the first switching elements include at least source bus lines; the first bus lines and any second bus lines connectable with the corresponding one of the first bus lines are some of the source bus lines.

In this configuration, the output signal is transmitted from the optical sensor via the corresponding source bus line. That is, the source bus line also serves as the optical sensor output line.

This simplifies the configuration of the display panel.

More specifically, there is no need of providing an optical sensor output line in addition. Thus, it is possible to realize a display panel with a large aperture ratio.

Moreover, the display panel of the present invention is preferably configured such that each pixel includes three picture element electrodes; the three picture element electrodes being respectively connected with transistors connected with different source bus lines; the three picture element electrodes respectively receiving image signals via the different source bus lines from an identical input terminal.

With this configuration, the number of the input terminals necessary for the source bus lines is smaller. This would lead to such a drawback that the detection of the output signal from the optical sensor via the input terminals is carried out with a lower degree of freedom in positioning the detector terminal of the inspecting device.

To overcome this problem, the configuration of the present invention allows the detection of the output signal via the plurality of the bus lines. Thus, the configuration of the present invention can avoid the reduction in the degree of freedom in positioning the detector terminal.

As a result, the inspection of the optical sensor can be carried out more easily.

In order to attain the object, a method of the present invention is an inspecting method for a display panel of active-matrix type including a display section including (i) a plurality of pixels each including picture element electrodes and (ii) optical sensors, the inspecting method inspecting whether or not the optical sensors of the display section are normally operable, wherein the active-matrix display panel includes: first switching elements; and bus lines, each picture element electrode is connected with corresponding one of the first switching elements, each first switching element is connected with corresponding one of the bus lines, the optical sensors output an output signal so that the output signal is transmitted to a peripheral region of the display section via corresponding one of the bus lines, the bus lines includes first bus lines used for the transmission of the output signal and second bus lines not used for the transmission of the output signal, at least one of the first bus lines is electrically connectable with at least one of the second bus lines, the display panel comprises a second switching element for connecting and disconnecting the at least one of the first bus lines and the at least one of the second bus lines, the method comprises: inspecting whether or not an optical sensor of the display section is normally operable, the step of inspecting including: electrically connecting one of the first bus lines with one of the second bus lines; and detecting, in the peripheral region, the output signal from the first bus line and the second bus line electrically connected with each other, so as to inspect whether or not the optical sensor of the display section is normally operable.

With this method, the inspection as to whether the optical sensor is normally operable or not can be carried out by detecting the output signal from a plurality of bus lines by the switching-over of the switches.

Thus, for example, the detector terminal of the inspecting device can be positioned with a greater degree of freedom.

Moreover, it is possible to utilize a plurality of bus lines in order to transmit the output signal from the optical sensor.

Therefore, it is possible to carry out the transmission of the output signal with a greater substantial line width. This reduces the line resistance against the transmission of the output signal, thereby reducing the output delay of the output signal.

The inspecting method of the display panel allows easy inspection of the optical sensors and reduction in the output delay of the output signal of the optical sensors.

The inspecting method according to the present invention for inspecting the display panel is preferably arranged such that the display panel includes, in the peripheral region, pads with which the detection of the output signal is possible to carry out, the pads being respectively provided to each of the first and second bus lines electrically connectable with each other; the pads provided to the first and second bus lines connectable with each other are positioned adjacent with each other, the step of inspecting is arranged such that the detection of the output signal is carried out by detecting the output signal from the pads adjacent to each other.

With this method, the detection of the output signal can be carried out by detecting the output signal from the pads adjacent to each other.

This provides a greater substantial pad width to the inspection of the optical sensors. This makes it possible to carry out the inspection of the optical sensors more easily.

The inspecting method according to the present invention for inspecting the display panel is preferably arranged such that the display panel is configured such that: each pixel includes three picture element electrodes; the three picture element electrodes are respectively connected with switching elements connected with different source bus lines; the three picture element electrodes respectively receive image signals via the different source bus lines from an identical input terminal; a sampling switch is provided between the input terminal and the source bus lines, the sampling switch for switching over which one of the source bus lines transmits the image signal inputted from the input terminal; and the first bus lines and any second bus lines connectable with the corresponding one of the first bus lines are some of the source bus lines, the step of inspecting includes: switching the sampling switch so that the first bus line and the second bus line electrically connectable with the first bus line are able to transmit the image signal inputted from the input terminal.

With this method, the detection of the output signal can be carried out by utilizing the plurality of input terminals connectable with the source bus lines.

This avoids the reduction of the degree of freedom in positing the detector terminal of the inspecting device, which reduction is caused due to the smaller number of the input terminals.

### Advantageous Effects of Invention

As described above, the display panel of the present invention is configured such that the display section includes optical sensors; the optical sensors output an output signal so that the output signal is transmitted to a peripheral region of the display section via corresponding one of the bus lines; the bus lines includes first bus lines used for the transmission of the output signal and second bus lines not used for the transmission of the output signal; at least one of the first bus lines is electrically connectable with at least one of the second bus lines; and the display panel comprises a second switching element for connecting and disconnecting the at least one of the first bus lines and the at least one of the second bus lines.

As described above, the inspecting method according to the present invention for inspecting a display panel is arranged such that the active-matrix display panel includes: first switching elements; and bus lines, each picture element electrode is connected with corresponding one of the first switching elements, each first switching element is connected with corresponding one of the bus lines, the optical sensors output an output signal so that the output signal is transmitted to a peripheral region of the display section via corresponding one of the bus lines, the bus lines includes first bus lines used for the transmission of the output signal and second bus lines not used for the transmission of the output signal, at least one of the first bus lines is electrically connectable with at least one of the second bus lines, the display panel comprises a second switching element for connecting and disconnecting the at least one of the first bus lines and the at least one of the second bus lines, the method comprises: inspecting whether or not an optical sensor of the display section is normally operable, the step of inspecting including: electrically connecting one of the first bus lines with one of the second bus lines; and detecting, in the peripheral region, the output signal from the first bus line and the second bus line electrically connected with each other, so as to inspect whether or not the optical sensor of the display section is normally operable.

Thus, the present invention provides a display panel and an inspecting method thereof, each of which allows easy inspection of the optical sensors and reduction in the output delay of the output signal from the optical sensors.

### Brief Description of Drawings

Fig. 1

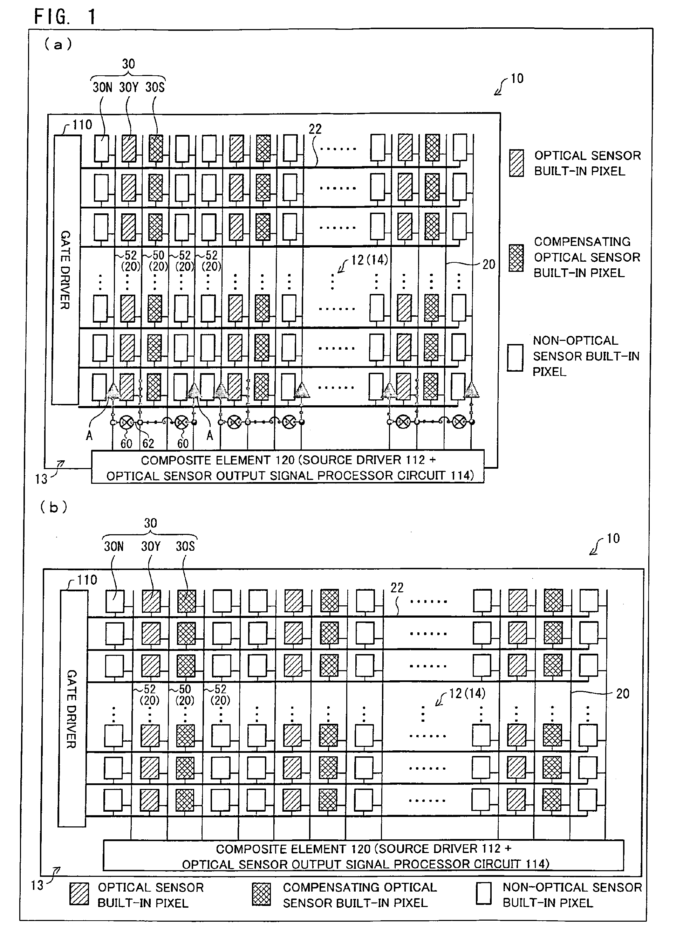

   Fig. 1 is a view schematically illustrating display panels, and illustrates one embodiment of the present invention in (a) and a conventional art in (b).
Fig. 2

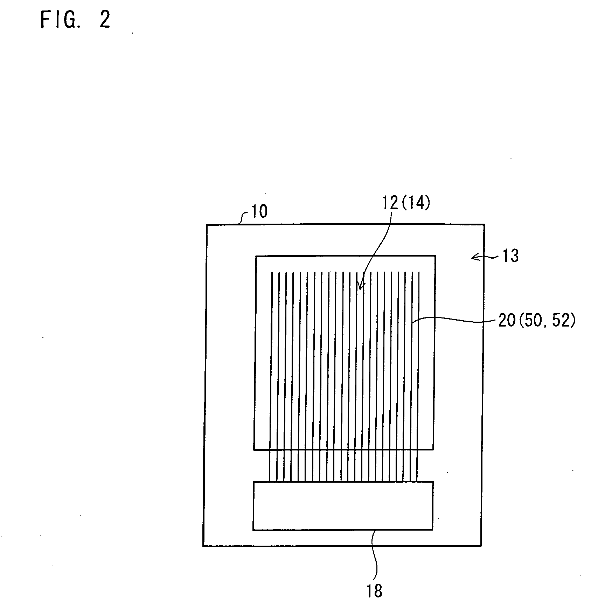

   Fig. 2 is a view schematically illustrating a positional relationship between lines and pads in a liquid crystal panel.
Fig. 3

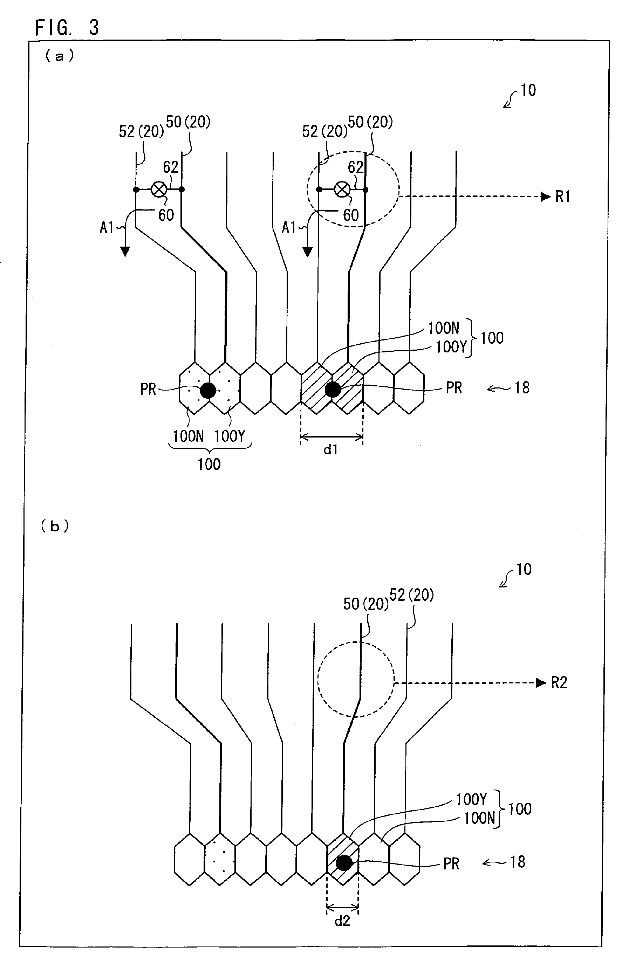

   Fig. 3 is a view schematically illustrating pad sections, and illustrates one embodiment of the present invention in (a) and a conventional art in (b).
Fig. 4

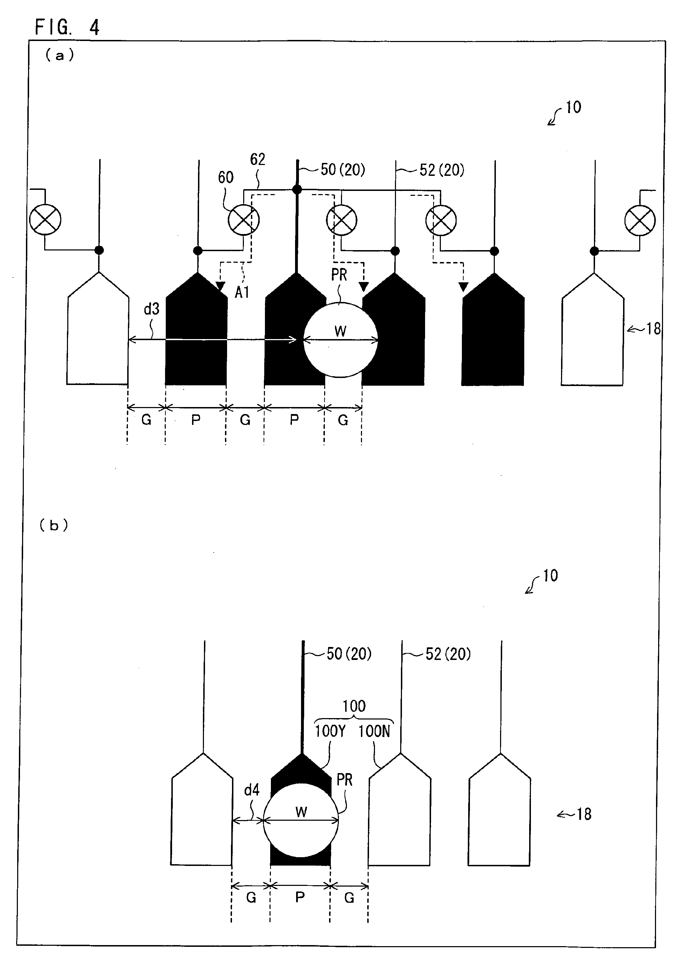

   Fig. 4 is a view schematically illustrating the pad sections under magnification, and illustrates the one embodiment of the present invention in (a) and the conventional art in (b).
Fig. 5

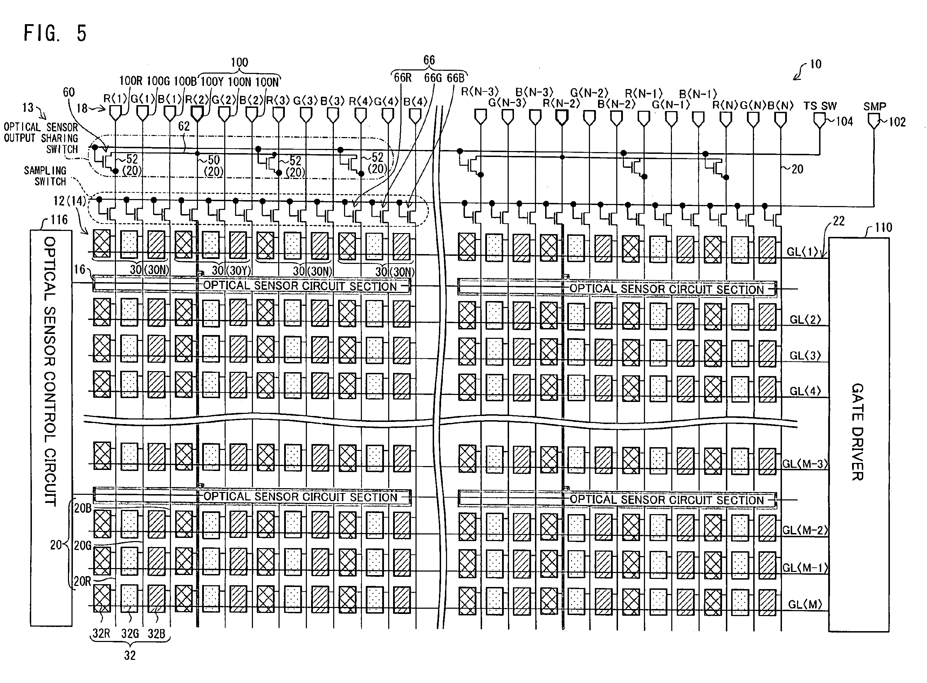

   Fig. 5 is a view of one embodiment of the present invention and schematically illustrates a configuration of a display panel.
Fig. 6

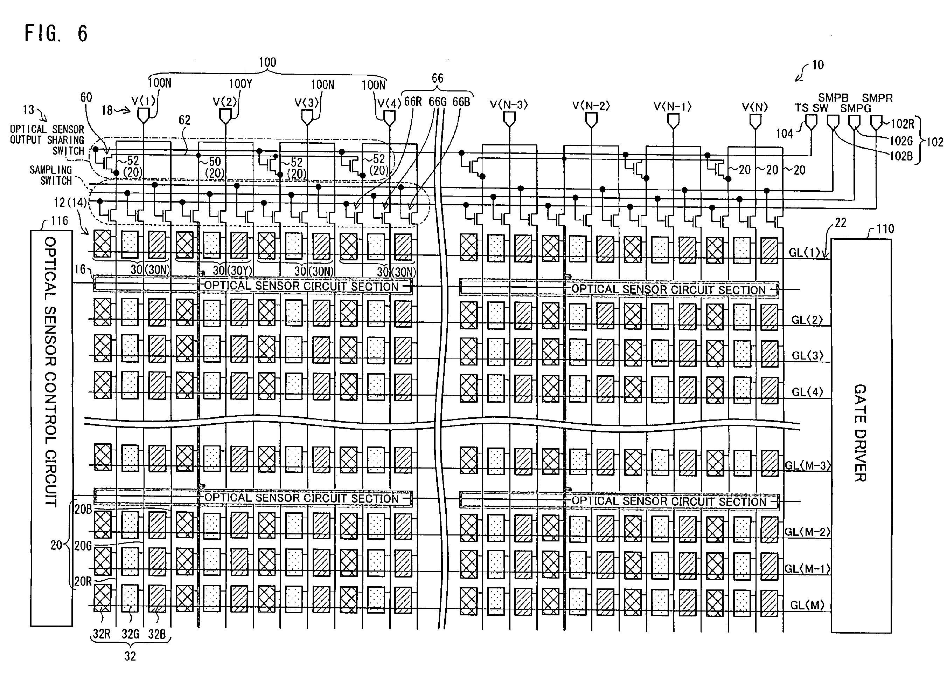

   Fig. 6 is a view of another embodiment of the present invention and schematically illustrates a configuration of a display panel.
Fig. 7

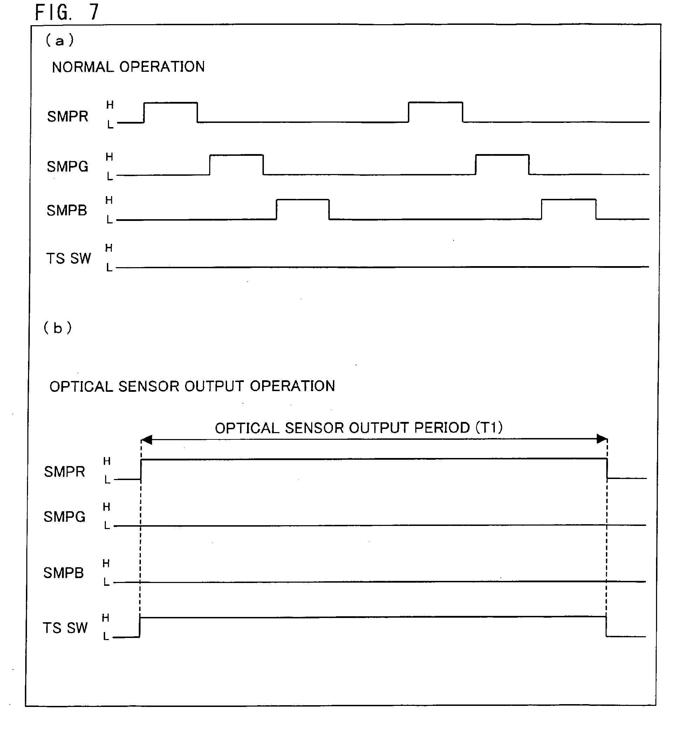

   Fig. 7 is a view illustrating a driving signal, and illustrates the driving signal under normal operation in (a) and the driving signal when a sensor is in operation in (b).
Fig. 8

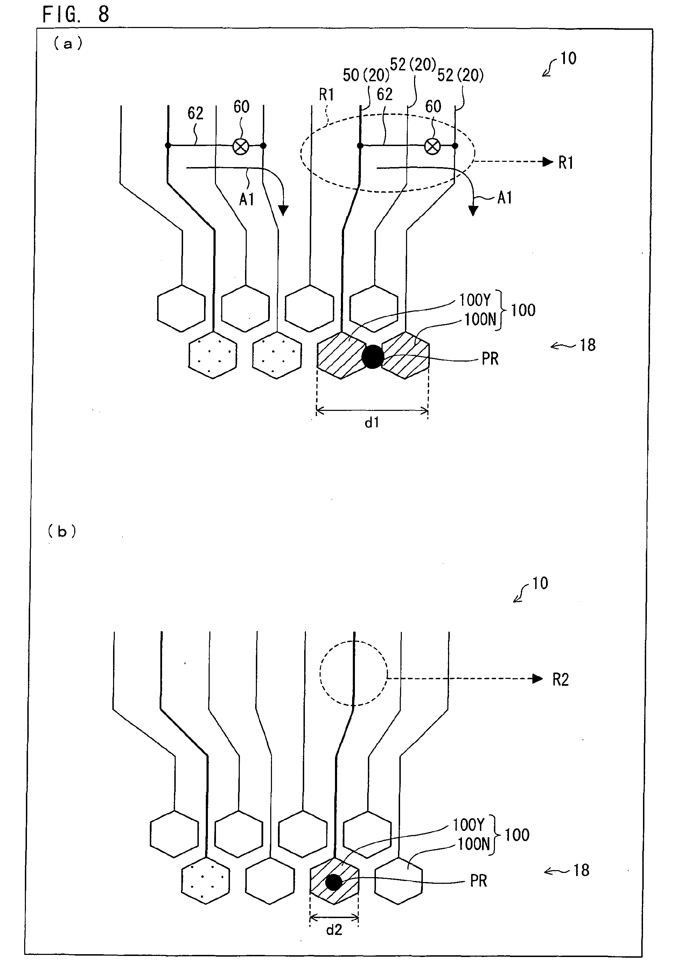

   Fig. 8 is a view schematically illustrating pad sections, and illustrates the another embodiment of the present invention in (a) and a conventional art in (b).
Fig. 9
   Fig. 9 is a view illustrating a conventional art and schematically illustrate a configuration of a display panel.
Fig. 10
   Fig. 10 is a view illustrating a conventional art and schematically illustrates a configuration of a pixel.

### Description of Embodiments

### [First Embodiment]

One embodiment of the present invention is described below, referring to drawings.

(a) of Fig. 1 is a view schematically illustrating a configuration of a display panel 10 according to the present embodiment. (b) of Fig. 1 is a view for comparison with (a) of Fig. 1, and illustrates a conventional display panel 10.

As illustrated in (a) of Fig. 1, the display panel 10 of the present embodiment has a configuration substantially similar to that of the display panel 10 described above referring to Fig. 9. That is, the display panel 10 is of active matrix type in which a plurality of pixels 30 are arranged in matrix. Among the pixels 30, a plurality of source bus lines 20 and a plurality of gate bus lines 22 are arranged to cross each other substantially perpendicularly to each other. The source bus lines 20 and the gate bus lines 22 are respectively connected with switching elements (not illustrated) such as TFT (Thin Film Transistors) provided respectively to picture element electrodes (not illustrated).

Moreover, in a peripheral region 13 around the display section 12 including the pixels 30 arranged in matrix, a gate driver 110 and a composite element 120 (in which a source driver 112 and an optical sensor output signal processor circuit 114 are integrated), etc. are provided.

In the display panel 10 of the present embodiment, the composite element 120 are COG (Chip On Glass)-mounted and connected with the source bus lines 20.

Here, the display panel 10 of the present embodiment includes optical sensor 40 (not illustrated in (a) and (b) of Fig. 1). More specifically, as explained above referring to Fig. 10, the pixels 30 are provided with an optical sensor 40.

Note that the optical sensors 40 are not provided to all the pixels 30, but only part of the pixels 30.

Moreover, some of the optical sensors 40 are compensation optical sensor for compensating a dark current of the optical sensors for sensing light.

In (a) and (b) of Fig. 1, pixels 30 in which an optical sensor 40 for generally sensing light is provided are referred to as optical sensor built-in pixels 30Y. Pixels 30 in which no optical sensor 40 is provided are referred to as non-optical sensor built-in pixels 30N. Pixels 30 in which the compensating optical sensor is provided are referred to as compensating optical sensor built-in pixels 30S.

As explained above, source bus lines 20 connected with the optical sensor built-in pixels 30Y serve as optical sensor output lines 50 for transmission of an optical sensor output signal from the optical sensors 40.

On the other hand, source bus lines 20 connected with the non-optical sensor built-in pixels 30N serve as non-optical sensor output lines 52 as explained above.

### (Optical Sensor Output Sharing Switch)

The display panel 10 of the present embodiment includes an optical sensor output sharing switch 60.

That is, the display panel 10 of the present embodiment illustrated in (a) of Fig. 1 is different from the conventional display panel 10 illustrated in (b) of Fig. 1 in that the display panel 10 of the present embodiment includes connection lines 62 for connecting adjacent source bus lines 20 with each other, and an optical sensor output sharing switch 60.

More specifically, the optical sensor output sharing switch 60 is provided in the peripheral region 13 of the display panel 10, more specifically, in a region between the display section 12 and the composite element 120. The optical sensor output sharing switch 60 has a function of switching over between electrical connection and disconnection between an optical sensor output line 50 (source bus line 20) and a non-optical sensor output line 52 (source bus line 20).

### (Configuration within Display Panel)

In the following, the optical sensor output sharing switch 60 is described referring to Fig. 2 and (a) and (b) of Fig. 3.

Fig. 2 is a view schematically illustrating positional relationship between lines and pads in the display panel 10.

As illustrated in Fig. 2, the display panel 10 has the display section 12 (optical sensor section 14) in its center portion, and pad sections 18 in the peripheral region 13. The pad sections 18 are for mounting (COG mounting) of the composite element (not illustrated) in which the source driver 112 and the optical sensor output signal processor circuit 114 are integrated.

For transmission of the signal from the composite element 120 via the pad sections 18 to the respective pixels (not illustrated) of the display section 12, the source bus lines 20 are provided to connect the pad sections 18 respectively with the display section 12.

In the display panel 10 of the present embodiment, the optical sensor (not illustrated) is provided in a pixel (not illustrated). For transmitting the optical sensor output signal from the optical sensors 40 to the composite element 120, the source bus lines 20 are used.

That is, the display panel 10 of the present embodiment, the source bus lines 20 also serve as the optical sensor output lines 50.

### (Pad Section)

Next, the pad sections 18 are described referring to (a) and (b) of Figs. 3. The pad sections 18 include a pad 100 for electrically connecting the composite element 120 with the source bus lines 20 that also serve as the optical sensor output lines 50.

(a) of Fig. 3 is a view schematically illustrating a configuration of the pad section of the display panel 10 of the present embodiment. Moreover, (b) of Fig. 3 is a view for comparison with (a) of Fig. 3, and schematically illustrates a configuration of a conventional display panel 10. Note that the pads 100 are actually provided with a slight gap therebetween and thereby are electrically disconnected from each other, even though adjacent pads 100 may look as if they are in touch with each other in (a) and (b) of Fig. 3.

As illustrated in (a) of Fig. 3, the display panel 10 of the present embodiment includes an optical sensor output sharing switch 60 between an optical sensor output line 50 and a non-optical sensor output line 52 adjacent to the optical sensor output line 50 or in a vicinity of the optical sensor output line 50. As described above, the optical sensor output sharing switch 60 can switch over between electrical connection and disconnection between the optical sensor output line 50 and the non-optical sensor output line 52.

As illustrated in (b) of Fig. 3, the conventional display panel 10 is configured such that a wiring, switch, or the like for enabling electrical connection between the optical sensor output line 50 and the non-optical sensor output line 52 is not provided in the vicinity of the pad section 18.

### (Easy Inspection)

With the optical sensor output sharing switch 60, the display panel 10 of the present embodiment allows easy inspection of the optical sensor 40.

For inspecting the optical sensor 40, it is desirable in terms of cost reduction that the inspection is carried out before compounds such as the composite element (not illustrated) is mounted to the display panel 10. By examining the optical sensor output signal from the optical sensor 40, it is possible to inspect whether the optical sensor 40 is normally operable or not.

In order to examine the optical sensor output signal, it is a simple way to use the optical sensor output pad 100Y (COG pad) connected with the optical sensor output line 50. This is because the composite element 120 is not mounted to the optical sensor output pad 100Y and thus the optical sensor output pad 100Y can be inspected by contact detection with a probe PR or the like.

Furthermore, the inspection with the prober requires contacting the probe PR of the prober to the optical sensor output pad 100Y precisely.

Conceptually, in the conventional display panel 10, a width (d2) of the optical sensor output pad 100Y is an alignment margin of the probe PR as illustrated in (b) of Fig. 3.

On the other hand, in the display panel 10 of the present embodiment, the optical sensor output line 50 and the non-optical sensor output line 52 adjacent thereto are connectable with each other via the optical sensor output sharing switch 60, as illustrated in (a) of Fig. 3. With this configuration, the inspection of the optical sensor 40 can be carried out in such a manner that, when the optical sensor 40 is inspected, the optical sensor output sharing switch 60 is turned on so as to transmit (see Arrow A1) the optical sensor output signal to the non-optical sensor output line 52 as well. Thus, the optical sensor output signal can be detected not only at the optical sensor output pad 100Y but also at the non-optical sensor output pad 100N adjacent thereto.

As a result, the alignment margin of the probe PR is conceptually widened to a sum (d1) of the width of the output sensor output pad 100Y and a width of the non-optical sensor output pad 100N adjacent thereto. That is, the alignment margin of the probe PR is widened to as much as two pads (pad 100 N and pad 100Y).

In this way, the alignment margin of the probe PR is widened in the display panel 10 of the present embodiment. Thus, the inspection of the optical sensors 40 becomes easier in the display panel 10 of the present embodiment.

### (Output Delay)

Next, the output delay of the optical sensor output signal is described.

As explained above, the output delay is caused due to a large line resistance attributed to the narrow line width of the source bus line 20 used as the optical sensor output line 50.

To deal with this problem, the display panel 10 of the present embodiment, the optical sensor output line 50 and the non-optical sensor output line 52 are connectable with each other via the optical sensor output sharing switch 60.

With this configuration, it is possible to transmit the optical sensor output signal to the pads 100 via the optical sensor output line 50 and the non-optical sensor output line 52. That is, the line width can be substantially doubled. Thus, it is possible to reduce the line resistance against the transmission of the optical sensor output signal.

For more specific explanation, assume that a line resistance outside display section is R1Ω in the conventional display panel 10 (see R2 in (b) of Fig. 3). In this case, a line resistance outside display section is about R1/2Ω in the display panel 10 of the present embodiment.

As such, the line resistance can be reduced in the display panel 10 of the present embodiment, thereby reducing the output delay in the display panel 10 of the present embodiment.

Moreover, in the display panel 10 of the present embodiment, contact resistance of the pads 100 can be reduced if, for example, the probe PR is contacted partly with the optical sensor output pad 100Y and partly with the non-optical sensor output pad 100N.

For more specific explanation, assume that a contact resistance of the pads 100 is R2Ω in the conventional display panel 10. In this case, a contact resistance of the pads 100 is R2/2Ω in the display panel 10 of the present embodiment.

As such, the contact resistance of the pads can be reduced in the display panel 10 of the present embodiment.

### (Alignment Margin)

The alignment margin is described referring to (a) and (b) of Fig. 4.

(a) of Fig. 4 is a view schematically illustrating the configuration of the pad section 18 of the present embodiment under magnification. Moreover, (b) of Fig. 4 is a view for comparison with (a) of Fig. 4 and schematically illustrates a configuration of a conventional pad section 18.

In (a) and (b) of Fig. 4, w is an end diameter of the probe PR, P is a width of the pads 100N and 100Y, G is a gap between the pads 100N and 100Y, and d3 and d4 are alignment margins.

As illustrated in (b) of Fig. 4, the conventional display panel 10 is configured such that the optical sensor output signal is outputted from a single pad 100 (output sensor output pad 100Y).

Thus, the alignment margin is as follows:
When G < W: G + P/2 - W/2 - X;
When G ≥ W: P/2 + W/2 - X.
   where X is a minimum overlapping width with which the probe PR overlaps the pad 100N and/or 100Y.

Moreover, a maximum alignment margin is obtained when G = W.

On the other hand, the display panel 10 of the present embodiment is configured such that the optical sensor output line 50 and the non-optical sensor output line 52 adjacent thereto are electrically connected with each other via the connection line 62 and the optical sensor output sharing switch 60. More specifically, see (a) of Fig. 4 illustrating an exemplary configuration in which one optical sensor output line 50 is connected with three non-optical sensor output line 52 adjacent thereto.

With this configuration, the aliment margin is as follows:
When G < W: 2.5 × G + 2×P - W/2 - X;
When G ≥ W: P/2 + W/2 - X.
where X is a minimum overlapping width with which the probe PR overlaps the pad 100N and/or 100Y.
Moreover, the alignment margin can be wider when G < W (the end diameter W of the probe PR is greater than the gap G between the pads 100N and 100Y).

### (Entire Configuration)

Next, referring to Fig. 5, the entire configuration of the display panel 10 of the present embodiment is described, mainly explaining differences between the display panel 10 of the present embodiment and the conventional display panel 10. Fig. 5 is a view schematically illustrating the configuration of the display panel 10 of the present embodiment.

As illustrated in Fig. 5, the display panel 10 of the present embodiment includes the optical sensor output sharing switch 60, unlike the conventional display panel 10 explained above referring to Fig. 9. That is, the optical sensor output sharing switches 60 (surrounded by the dashed and dotted line) are provided between the sampling switches 66 (surrounded by the dotted line) and the pads 100.

Moreover, the optical sensor output sharing switches 60 are electrically connected with optical sensor output sharing switch control signal input pads 104 (TS SW) provided in the peripheral region 13.

When an optical sensor output sharing switch 60 is turned on in response to an optical sensor output sharing switch control signal, an optical sensor output line 50 and a non-optical sensor output line 52 associated with the optical sensor output sharing switch 60 are connected with each other.

Fig. 5 illustrates an exemplary configuration in which the optical sensor output sharing switch 60 causes, when it is turned on, the optical sensor output signal to be supplied to pads R<1> to R<4>, while the optical sensor output signal is to be supplied only to the pad R <2> otherwise.

With this configuration, the optical sensor output signal is transmitted via a plurality of source bus lines, thereby making it possible to reduce the output delay.

It may be configured such that the pad R<2> is provided in the vicinity of pad R<1> and pad R<4>. This can enlarge the alignment margin for positioning the prober.

### [Second Embodiment]

Next, another embodiment of the present invention is described referring to drawings. This embodiment is similar to the first embodiment except the following points described herein. For easy explanation, like references are given to members having the same functions as the members illustrated in the drawings for the first embodiment, and their explanation is omitted herein.

Unlike the display panel 10 of the first embodiment, the display panel 10 of the present embodiment is configured to perform Source-Share Drive (SSD) in which a source bus line to which an image signal is inputted is shared. More specifically, the display panel 10 is configured to be capable of performing so-called 3SSD drive in which three source bus lines are shared for the driving.

This is described below, referring to Fig. 6 schematically illustrating the configuration of the display panel 10 according to the present embodiment.

The display panel 10 of the present embodiment is configured such that an image signal from a single pad 100 (V<1> to V<N>) is transmitted to three source bus lines 20 (red picture element source bus line 20R, green picture element source bus line 20G, blue picture element source bus line 20B) respectively associated with three picture element electrodes 32 (red picture element electrode 32R, green picture element electrode 32G, blue picture element electrode 32B) provided in one pixel 30.

Sampling switches 66 (surrounded by the dotted line) is provided in order to switch over which one of the three source lines 20 receives the image signal from the single pad 100. More specifically, a red picture element sampling switch 66R, a green picture element sampling switch 66G, and a blue picture element sampling switch 66B are provided between one pad 100 for supplying the image signal and the picture element electrodes 32, in such a manner that the red picture element sampling switch 66R, the green picture element sampling switch 66G, and the blue picture element sampling switch 66B are respectively in association with the red picture element electrodes 32R, the green picture element electrode 32G, and the blue picture element electrode 32B.

The sampling switches 66 are electrically connected with sampling switch control signal input pads 102 provided in the peripheral region 13. More specifically, there are three types of the sampling switch control signal input pads 102, namely, a red picture element sampling switch control signal input pad 102R (SMPR), a green picture element sampling switch control signal input pad 102G (SMPG), and a blue picture element sampling switch control signal input pad 102B (SMPB). The picture element sampling switch control signal input pads are respectively connected with the sampling switches associated therewith.

When a sampling switch 66 is turned on in response to a sampling switch control signal, a picture element electrode 32 associated with the sampling switch 66 receives the signal to be transmitted to the picture element electrode 32.

The display panel 10 of the present embodiment, which is configured to be capable of performing the 3SSD drive, may be configured to include an optical sensor output sharing switch 60 so that the optical sensor output line 50 and the non-optical sensor output line 52 are electrically connectable, as in the display panel 10 of the first embodiment.

Fig. 6 illustrates an exemplary configuration in which an optical sensor output line 50 connected with the pad V <2>, which is an optical sensor output pad 100Y, is connected with three non-optical sensor output pads 100N via three optical sensor output sharing switches 60.

With this configuration, the optical sensor output signal from the optical sensor circuit section 16 can be outputted from the three non-optical sensor output pads 100N (V<1>, V<3>, and V<4>), as well as from the optical sensor output pad 100Y (V <2>).

With this configuration, it is possible to increase the substantial line width, as described above. As a result, it is possible to reduce the line resistance against the transmission of the optical sensor output signal.

This configuration may be configured such that the pads V<1>, V<2>, V<3>, and V<4> are provided in vicinity of each other, thereby enlarging the alignment margin for positioning the prober.

### (Driving Signal)

Referring to (a) and (b) of Fig. 7, a driving signal for the 3SSD driver is described here.

(a) and (b) of Fig. 7 are views illustrating examples of driving signal in the display panel 10 of Fig. 6. (a) of Fig. 7 illustrates the driving signal under a normal operation, whereas (b) of Fig. 7 illustrates the driving signal during illustrates the driving signal when a sensor is in operation.

### (Driving Signal under Normal Operation)

To begin with, the driving signal under the normal operation is described. As illustrated in (a) of Fig. 7, under the normal operation, H signals are subsequently outputted from the SMPR (red picture element sampling switch control signal input pad 102R), the SMPG (green picture element sampling switch control signal input pad 102G), and the SMPB (blue picture element sampling switch control signal input pad 102B). In response to the H signals, the sampling switches 66 (red picture element sampling switch 66R, green picture element sampling switch 66G, and blue picture element sampling switch 66B) are turned on respectively.

In this way, the source signals are supplied to the picture elements of the respective colors.

Under the normal operation, a TS SW (optical sensor output sharing switch control signal input pad 104) outputs an L signal.

### (Driving Signal under Optical Sensor Output Operation)

Next, the driving signal under optical sensor output operation is described. As illustrated in (b) of Fig. 7, under the optical sensor output operation, the H signal is outputted from only the SMPR (red picture element sampling switch control signal input pad 102R) among the sampling switch control signal input pads 102 in an optical sensor output period (T1). On the other hand, L signals are outputted from the SMPG (green picture element sampling switch control signal input pad 102G) and SMPB (blue picture element sampling switch control signal input pad 102B).

Consequently, only the red picture element sampling switch 66R connected to the SMPR is turned on among the sampling switches 66. Only the source bus line 20 (red picture element source bus line 20R) connected to the red picture element electrode 32R is connected the corresponding pad 100 (V <1> to V<N>).

On the other hand, the TS SW (output sensor output sharing switch control signal input pads 104) outputs a H signal. Consequently, the optical sensor output sharing switch 60 is turned on.

As a result, the optical sensor output line 50 (the red picture element source bus line 20R, that is, the source bus line connected to the picture element electrode 32 via the sampling switch 66) is electrically connected with the three non-optical sensor output lines 52 adjacent to the optical sensor output line 50.

### [Third Embodiment]

Still another embodiment of the present invention is described below referring to drawings. Except what is described herein, the present embodiment is similar to the embodiments described above. For easy explanation, like references are given to members having the same functions as the members illustrated in the drawings for the first embodiment, and their explanation is omitted herein.

A display panel 10 of the present embodiment is configured such that pads 100 are differently arranged from the pads 100 in the first embodiment. In the display panel 10 of the first embodiment, as illustrated in (a) of Fig. 3, the pads 100 are arranged in one row. On the other hand, the pads 100 in the present embodiment are arranged in a staggered manner. More specifically, the pads 100 are arranged in two rows in a staggered manner.

Because the display panel 10 of the present embodiment, the pads 100 are arranged in the staggered manner, the display panel 10 of the present embodiment is different from that of the first embodiment in terms of the way in which optical sensor output sharing switches 60 and the connection lines 62 connect optical sensor output lines 50 and non-optical sensor output line 52.

More specifically, in the display panel 10 of the first embodiment, the optical sensor output line 50 is connected with the non-optical sensor output line 52 adjacent thereto as illustrated in (a) of Fig. 3. On the other hand, the display panel 10 of the present embodiment is configured such that the optical sensor output line 50 is connected with a non-optical sensor output line 52 adjacent to the non-optical sensor output line 52 adjacent to the optical sensor output line. In other words, the optical sensor output line 50 is connected to the non-optical sensor output line 52 that is two lines away from the optical sensor output line 50.

With this configuration, the pads 100 arranged in the staggered manner allows the output of the optical sensor signal from a pad 100 adjacent to the pad 100 serving as the optical sensor output line 50.

Like the configuration of the display panel 10 of the first embodiment, this configuration can cause such an effect that the alignment margin is widened from d2 illustrated in (b) of Fig. 8 to d1 illustrated in (a) of Fig. 8.

Like the configuration of the display panel 10 of the first embodiment, this configuration can cause such an effect that the line resistance outside display section is reduced from R1Ω to R1/2Ω.

Moreover, like the configuration of the display panel 10 of the first embodiment, this configuration can cause such an effect that the contact resistance of the pads 100 is reduced from R2Ω to R2/2Ω.

In association with the reduction of the resistance, the output delay can be reduced.

The descriptions above mainly discuss the configuration of the display panel 10. The display panel 10 is in such a state that the composite element 120 and the like have not been mounted thereto, and thus the display panel 10 is preferably applicable to an inspection method for inspecting the optical sensor 40 in the display panel 10.

The display panel 10 may be, for example, a so-called liquid crystal display panel, or may be provided to a display device so as to constitute, for example, as a liquid crystal display device provided with the liquid crystal display panel.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention allows easy inspection of optical sensors. Thus, the present invention is favorably applicable to manufacture of optical sensor display panel or the like.

### Reference Signs List

- 10: Display Panel
- 12: Display Section
- 13: Peripheral Region
- 20: Source Bus Line (Bus Line)
- 30: Pixel
- 32: Picture Element Electrode
- 40: Optical Sensor
- 50: Optical Sensor Output Line (Bus line)
- 52: Non-Optical Sensor Output Line (Bus line)
- 60: Optical Sensor Output Sharing Switch (Switch)
- 66: Sampling Switch
- 100: Pad

## Claims

1. A display panel of active-matrix type, comprising:
a display section including a plurality of pixels, each of which includes a picture element electrode;
first switching elements; and
bus lines,
each picture element electrode being connected with corresponding one of the first switching elements,
each first switching element being connected with corresponding one of the bus lines, wherein:
the display section includes optical sensors;
the optical sensors output an output signal so that the output signal is transmitted to a peripheral region of the display section via corresponding one of the bus lines;
the bus lines includes first bus lines used for the transmission of the output signal and second bus lines not used for the transmission of the output signal;
at least one of the first bus lines is electrically connectable with at least one of the second bus lines; and
the display panel comprises a second switching element for connecting and disconnecting the at least one of the first bus lines and the at least one of the second bus lines.

2. The display panel as set forth in claim 1, comprising:
pads in the peripheral region, the pads being respectively provided to each of the first and second bus lines electrically connectable with each other, each pad being for electrically connecting an external element and the bus line to which the pad is provided.

3. The display panel as set forth in claim 2, wherein:
the pads provided to the first and second bus lines connectable with each other are positioned adjacent with each other.

4. The display panel as set forth in any one of claims 1 to 3, wherein:
the first switching elements are transistors;
the bus lines connected with the first switching elements include at least source bus lines;
the first bus lines and any second bus lines connectable with the corresponding one of the first bus lines are some of the source bus lines.

5. The display panel as set forth in claim 4, wherein:
each pixel includes three picture element electrodes;
the three picture element electrodes being respectively connected with transistors connected with different source bus lines;
the three picture element electrodes respectively receiving image signals via the different source bus lines from an identical input terminal.

6. An inspecting method for a display panel of active-matrix type including a display section including (i) a plurality of pixels each including picture element electrodes and (ii) optical sensors, the inspecting method inspecting whether or not the optical sensors of the display section are normally operable, wherein
the active-matrix display panel includes:
first switching elements; and
bus lines,
each picture element electrode is connected with corresponding one of the first switching elements,
each first switching element is connected with corresponding one of the bus lines,
the optical sensors output an output signal so that the output signal is transmitted to a peripheral region of the display section via corresponding one of the bus lines,
the bus lines includes first bus lines used for the transmission of the output signal and second bus lines not used for the transmission of the output signal;
at least one of the first bus lines is electrically connectable with at least one of the second bus lines,
the display panel comprises a second switching element for connecting and disconnecting the at least one of the first bus lines and the at least one of the second bus lines,
the method comprises:
inspecting whether or not an optical sensor of the display section is normally operable,
the step of inspecting including:
electrically connecting one of the first bus lines with one of the second bus lines; and
detecting, in the peripheral region, the output signal from the first bus line and the second bus line electrically connected with each other, so as to inspect whether or not the optical sensor of the display section is normally operable.

7. The inspecting method as set forth in claim 6, wherein:
the display panel includes, in the peripheral region, pads with which the detection of the output signal is possible to carry out, the pads being respectively provided to each of the first and second bus lines electrically connectable with each other;
the pads provided to the first and second bus lines connectable with each other are positioned adjacent with each other,
the step of inspecting is arranged such that the detection of the output signal is carried out by detecting the output signal from the pads adjacent to each other.

8. The inspecting method as set forth in claim 6 or 7, wherein
the display panel is configured such that:
each pixel includes three picture element electrodes;
the three picture element electrodes are respectively connected with switching elements connected with different source bus lines;
the three picture element electrodes respectively receive image signals via the different source bus lines from an identical input terminal;
a sampling switch is provided between the input terminal and the source bus lines, the sampling switch for switching over which one of the source bus lines transmits the image signal inputted from the input terminal; and
the first bus lines and any second bus lines connectable with the corresponding one of the first bus lines are some of the source bus lines,
the step of inspecting includes:
switching the sampling switch so that the first bus line and the second bus line electrically connectable with the first bus line are able to transmit the image signal inputted from the input terminal.
